# EUROPÄISCHE PATENTANMELDUNG

(11) **EP 3 680 684 A1**
(43) Veröffentlichungstag der Anmeldung: **15.07.2020**
(21) Anmeldenummer: 20150756.3
(22) Anmeldetag: 08.01.2020
(51) Int. Cl.: G01S 11/06, H04B 17/27, H04B 17/318

(54) **VERFAHREN ZUM IDENTIFIZIEREN EINES GERÄTS AUS EINER VIELZAHL GLEICHARTIGER GERÄTE**

(30) Priorität: 08.01.2019 DE 102019200110
(71) Anmelder: Robert Bosch GmbH, 70442 Stuttgart (DE)
(72) Erfinder: Matt, Peter, 72393 Salmendingen (DE); Kaerner, Christof, 73095 Albershausen (DE); Greiner, Rinaldo, 72768 Reutlingen (DE); Gutbrodt, Felix, 70771 Leinfelden-Echterdingen (DE); Eckel, Andreas, 73271 Holzmaden (DE); Schmidt, Sebastian, 72768 Reutlingen (DE); Schueler, Jochen, 72144 Dusslingen (DE)

(57) **Zusammenfassung**

Die Erfindung betrifft ein Verfahren zum Identifizieren eines Geräts aus einer Vielzahl gleichartiger Geräte durch ein Identifiziergerät mittels drahtloser Kommunikation bereit, wobei die Geräte und das Identifiziergerät jeweils eine Nahfeld-Drahtlosschnittstelle aufweisen, umfassend die Schritte:
- Heranführen des Identifiziergeräts an ein oder mehrere Geräte, derart, dass eine drahtlose Kommunikationsverbindung mittels der Nahfeld-Drahtlosschnittstellen zwischen dem Identifiziergerät und zumindest einem der Geräte herstellbar ist,
- Messen der jeweiligen von den Nahfeld-Drahtlosschnittstellen mehrerer Geräte bereitgestellten Signalstärken durch das Identifiziergerät,
- Identifizieren des örtlich nächsten Geräts anhand der gemessenen Signalstärken durch das Identifiziergerät.

## Beschreibung

### Technisches Gebiet

Die Erfindung betrifft ein Verfahren zum Identifizieren eines Geräts aus einer Vielzahl gleichartiger Geräte durch ein Identifiziergerät mittels drahtloser Kommunikation.

Die Erfindung betrifft weiter ein Identifiziergerät zum Identifizieren eines Geräts aus einer Vielzahl gleichartiger Geräte mittels drahtloser Kommunikation.

Obwohl die vorliegende Erfindung allgemein auf beliebige Geräte anwendbar ist, wird die vorliegende Erfindung in Bezug auf Geräte in Form von eBikes beschrieben.

### Stand der Technik

In der eBike-Produktion ist üblicherweise nach Zusammenbau der einzelnen Systemkomponenten für das eBike eine Bedatung des eBike-Systems vorzunehmen. Diese erfolgt, zumindest teilweise, eBike-individuell, das heißt in Abhängigkeit des konkreten eBikes. Beispiele für solch individuelle Daten sind unter anderem die Rahmennummer oder der Radumfang, der spezifisch für ein gewisse Modellgruppe ist. Für die individuelle Bedatung ist es notwendig, eine eindeutige Verbindung zwischen einem Programmiergerät, also beispielsweise das Gerät, an dem der Produktionsarbeiter die individuellen Daten eingeben kann und eBike herzustellen. Diese Eindeutigkeit kann beispielsweise durch Aufbau einer direkten Kabelverbindung zwischen einem Programmiergerät und dem Ziel-eBike gewährleistet werden. Bei Aufbau einer Funkverbindung muss diese Eindeutigkeit zunächst geschaffen werden. Für einen effizienten und fehlerfreien Produktionsprozess ist es relevant, dass das Schaffen der Eindeutigkeit keinen wesentlichen Aufwand für den Produktionsarbeiter darstellt. Außerdem muss eine Verwechslungssicherheit gewährleistet werden.

### Offenbarung der Erfindung

In einer Ausführungsform stellt die vorliegende Erfindung ein Verfahren zum Identifizieren eines Geräts aus einer Vielzahl gleichartiger Geräte durch ein Identifiziergerät mittels drahtloser Kommunikation bereit, wobei die Geräte und das Identifiziergerät jeweils eine Nahfeld-Drahtlosschnittstelle aufweisen, umfassend die Schritte:
- Heranführen des Identifiziergeräts an ein oder mehrere Geräte, derart, dass eine drahtlose Kommunikationsverbindung mittels der Nahfeld-Drahtlosschnittstellen zwischen dem Identifiziergerät und zumindest einem der Geräte herstellbar ist,
- Messen der jeweiligen von den Nahfeld-Drahtlosschnittstellen mehrerer Geräte bereitgestellten Signalstärken durch das Identifiziergerät,
- Identifizieren des örtlich nächsten Geräts anhand der gemessenen Signalstärken durch das Identifiziergerät.

In einer weiteren Ausführungsform stellt die vorliegende Erfindung ein Identifiziergerät bereit zum Identifizieren eines Geräts aus einer Vielzahl gleichartiger Geräte mittels drahtloser Kommunikation, wobei die Geräte und das Identifiziergerät jeweils eine Nahfeld-Drahtlosschnittstelle aufweisen, welches zur Durchführung der folgenden Schritte ausgebildet ist:
- Messen der jeweiligen von den Nahfeld-Drahtlosschnittstellen mehrerer Geräte bereitgestellten Signalstärken, wenn die Entfernung zu zumindest einem der Geräte dergestalt ist, dass eine drahtlose Kommunikationsverbindung mit zumindest einem der Geräte herstellbar ist, und
- Identifizieren des örtlich nächsten Geräts anhand der gemessenen Signalstärken.

Die Nahfeld-Drahtlosschnittstelle kann dabei insbesondere elektromagnetische Signale von Nahfeldfunktechniken wie RFID, Bluetooth, NFC, ZigBee, ANT+ oder dergleichen bereitstellen.

Unter dem Begriff "Nahfeld" ist insbesondere ein elektromagnetisches Signal mit einer Reichweite von maximal 25 m, vorzugsweise weniger als 10 m, insbesondere weniger als 5 m, vorzugsweise weniger als 1 m zu verstehen.

Einer der damit erzielten Vorteile ist, dass eine hohe Verwechslungssicherheit zwischen gleichartigen jedoch unterschiedlichen Geräten gegeben ist. Darüber hinaus kann eine Identifikation schnell und effizient durchgeführt werden. Ein weiterer Vorteil ist eine einfache Implementierung.

Weitere Merkmale, Vorteile und weitere Ausführungsformen der Erfindung sind im Folgenden beschrieben oder werden dadurch offenbar.

Gemäß einer vorteilhaften Weiterbildung werden die Signalstärken über eine vorgebbare erste Zeitspanne gemessen. Dies erhöht wesentlich die Zuverlässigkeit bei der Identifizierung eines Geräts durch das Identifiziergerät.

Gemäß einer weiteren vorteilhaften Weiterbildung werden die Signalstärken über eine vorgebbare zweite Zeitspanne beobachtet, und innerhalb der zweiten Zeitspanne für die erste Zeitspanne gemessen.

Gemäß einer weiteren vorteilhaften Weiterbildung wird die zweite Zeitspanne mindestens fünfmal so groß, insbesondere mindestens zehnmal so groß wie die erste Zeitspanne gewählt.

Gemäß einer weiteren vorteilhaften Weiterbildung erfolgt das Messen mit einer Abtastrate von mindestens 10 Hz, insbesondere mehr als 50 Hz, vorzugsweise mehr als 100 Hz. Vorteil ist, dass damit die Zuverlässigkeit bei der Identifizierung noch weiter erhöht wird.

Gemäß einer weiteren vorteilhaften Weiterbildung wird ein Gerät identifiziert, wenn ein vorgebbarer Schwellwert für die Signalstärke, insbesondere während der ersten Zeitspanne, vorzugsweise für mehr als die Hälfte der ersten Zeitspanne, überschritten wird. Vorteil hiervon ist, dass damit, insbesondere in Kombination mit dem Messen über eine Zeitspanne, eine zuverlässige Identifikation eines Geräts ermöglicht wird.

Gemäß einer weiteren vorteilhaften Weiterbildung wird die Lage der Nahfeld-Drahtlosschnittstellen an den Geräten angezeigt und das Heranführen des Identifiziergeräts erfolgt an die jeweilige angezeigte Lage. Auf diese Weise wird die Zuverlässigkeit bei der Identifizierung erhöht.

Gemäß einer weiteren vorteilhaften Weiterbildung stellt das identifizierte Gerät und/oder das Identifiziergerät eine Rückmeldeinformation über eine erfolgte Identifizierung bereit. Damit wird die Effektivität für einen Nutzer des Identifiziergerät verbessert.

Gemäß einer weiteren vorteilhaften Weiterbildung wird bei einer unvollständigen oder uneindeutigen Identifizierung eines Geräts eine Fehlerinformation bereitgestellt, insbesondere umfassend eine Ausrichtungsinformation für das Identifiziergerät. Auf diese Weise wird ebenfalls die Effizienz bei der Identifizierung eines Geräts verbessert, gleichzeitig die Fehleranfälligkeit bei der Identifizierung verringert. Wird eine Ausrichtungsinformation bereitgestellt, kann ein Nutzer des Identifiziergeräts auf schnelle und einfache Weise das Identifiziergerät korrekt ausrichten und damit effizient eine Identifizierung eines Geräts ermöglichen. Das Identifiziergerät kann hierzu mehrere, insbesondere unterschiedlich ausgebildete oder ausgerichtete Antennen

Gemäß einer weiteren vorteilhaften Weiterbildung wird die Rückmeldeinformation und/oder die Fehlerinformation optisch, akustisch und/oder haptisch bereitgestellt, insbesondere wobei sich das Bereitstellen von Rückmeldeinformation und Fehlerinformation zumindest teilweise unterscheidet. Vorteil hiervon ist, dass auf einfache Weise einem Nutzer eine Rückmeldung oder ein Fehler angezeigt werden kann.

Gemäß einer weiteren vorteilhaften Weiterbildung wird das Messen und Identifizieren mittels einer Bestätigung initiiert. Auf diese Weise ist ein einfaches Triggern zum Beginnen des Mess- und Identifiziervorgangs möglich. Unnötiges Messen bereits vor dem Heranführen des Identifiziergeräts an die Geräte wird damit vermieden. Damit kann das versehentliche Identifizieren beim ungeplanten Passieren oder Heranführen des Identifiziergeräts an ein Gerät verhindert werden. Ebenfalls wird dadurch Energie eingespart.

Gemäß einer weiteren vorteilhaften Weiterbildung des Identifiziergeräts ist ein Taster angeordnet, insbesondere ein mechanischer, induktiver oder kapazitiver Taster und/oder ein virtueller Taster auf einem Touchscreen zum Auslösen der Schritte Messen und Identifizieren. Damit kann das versehentliche Identifizieren beim ungeplanten Passieren oder Heranführen des Identifiziergeräts an ein Gerät verhindert werden. Ebenfalls wird dadurch Energie eingespart. Mittels des Tasters kann beispielsweise eine Beobachtungszeitspanne zum Beobachten von Signalen der Nahfeld-Drahtlosschnittstellen initiiert werden. Wird innerhalb der Beobachtungszeitspanne nicht während einer Messzeitspanne eine ausreichend hohe Signalstärke gemessen, erfolgt keine Identifizierung und für eine Identifizierung muss durch erneutes Betätigen des Tasters erneut die Beobachtungszeitspanne initiiert werden.

Gemäß einer weiteren vorteilhaften Weiterbildung ist eine Rückmeldeeinrichtung angeordnet, die ausgebildet ist, bei einer unvollständigen oder uneindeutigen Identifizierung eines Geräts und/oder bei einer erfolgreichen Identifizierung eines Geräts zumindest eine Rückmeldung, insbesondere optisch, akustisch und/oder haptisch oder dergleichen auszugeben. Vorteil hiervon ist, dass auf einfache Weise einem Nutzer eine Rückmeldung oder ein Fehler angezeigt werden kann.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

### Kurze Beschreibung der Zeichnungen

Dabei zeigt
- Figur 1: einen Schritt eines Verfahrens gemäß einer Ausführungsform der vorliegenden Erfindung;
- Figur 2: einen weiteren Schritt eines Verfahrens gemäß einer Ausführungsform der vorliegenden Erfindung;
- Figur 3: einen weiteren Schritt eines Verfahrens gemäß einer Ausführungsform der vorliegenden Erfindung;
- Figur 4: einen weiteren Schritt eines Verfahrens gemäß einer Ausführungsform der vorliegenden Erfindung;
- Figur 5: Schritte eines Verfahrens gemäß einer Ausführungsform der vorliegenden Erfindung; und
- Figur 6: Schritte eines Verfahrens gemäß einer Ausführungsform der vorliegenden Erfindung.

### Ausführungsformen der Erfindung

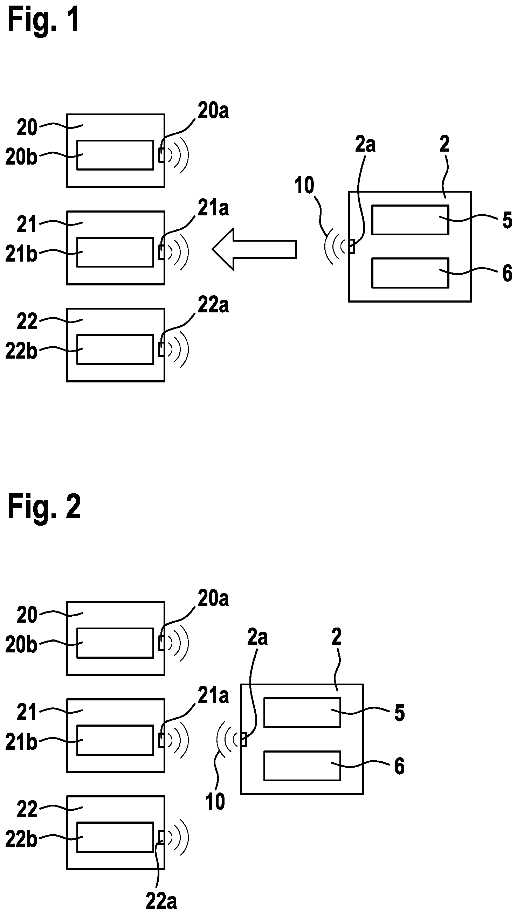

Die Figuren 1-4 zeigen jeweils einen Schritt eines Verfahrens gemäß einer Ausführungsform der vorliegenden Erfindung.

Im Einzelnen sind in Figur 1 drei Geräte 20, 21, 22 gezeigt. Jedes Gerät 20, 21, 22 umfasst eine Drahtlosschnittstelle 20a, 21a, 22a sowie eine Feedbackeinrichtung 20b, 21b, 22b. Weiterhin ist in Figur 1 ein Identifiziergerät 2 gezeigt. Das Identifiziergerät 2 in Form eines Programmiergeräts, beispielsweise ein sogenanntes Handheld-Device, umfasst eine Nahfeld-Drahtlosschnittstelle 2a, einen Taster 5 sowie eine Feedbackeinrichtung 6.

Ein Produktionsarbeiter führt nun das Programmiergerät 2 an eines der Geräte 20, 21, 22, wobei im Folgenden Gerät 21 als Zielgerät bezeichnet wird, heran. Zur Nutzerführung sind die Nahfeld-Drahtlosschnittstelle 2a des Programmiergeräts 2 und die Nahfeld-Drahtlosschnittstellen 20a, 21a, 22a der Geräte 20, 21, 22 am jeweiligen Gehäuse eindeutig markiert, beispielsweise mit einem entsprechenden Symbol oder dergleichen. Bei einheitlichem Produktdesign kann die Position der Nahfeld-Drahtlosschnittstelle 20a, 21a, 22a auch mittels Schulungsmaßnahmen trainiert werden.

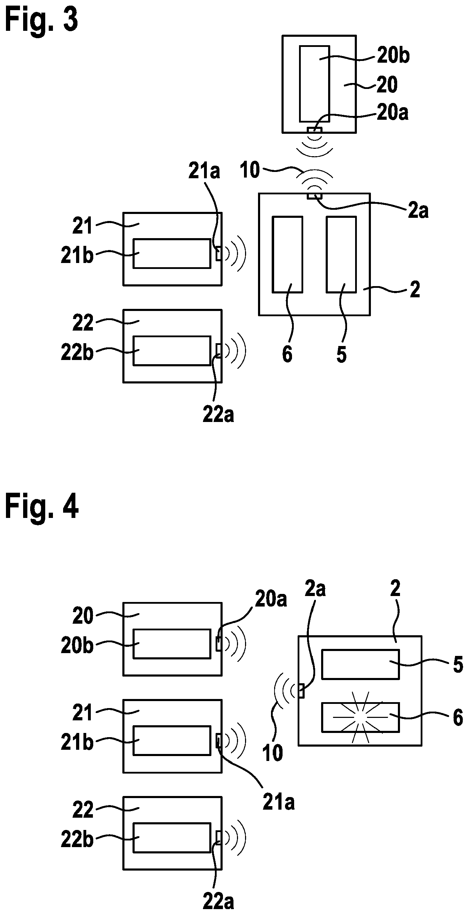

Nachdem ein Nutzer, beispielsweise ein Produktionsarbeiter, das Programmiergerät 2 nah an das Zielgerät 21 herangeführt hat, kann er über einen Taster 5 am Programmiergerät 2 den Identifikationsprozess triggern. Dadurch soll ausgeschlossen werden, dass bereits bei versehentlichem Vorbeiführen des Programmiergerätes 2 an einem potentiellen Zielgerät ein Verbindungswunsch durch den Produktionsarbeiter angenommen beziehungsweise ausgelöst wird. Am Programmiergerät 2 und/oder am Zielgerät 21 ermöglicht ein "Feedback-Mechanismus" mittels der Feedbackeinrichtungen 6, 20b, 21b, 22b zu erkennen, ob das Pairing erfolgreich war, also ob die Nahfeld-Funkverbindung mittels der Nahfeld-Drahtlosschnittstellen 2a, 20a, 21a, 22a erfolgreich eingerichtet wurde: Das Feedback mittels der Feedbackeinrichtung 6 am Programmiergerät 2 ermöglicht einerseits das Erkennen einer erfolgreichen Verbindung mit einem der Geräte 20, 21, 22. Die Feedbackeinrichtung 20b, 21b, 22b am jeweiligen Gerät 20, 21, 22 andererseits ermöglicht das Erkennen der Identifikation eines spezifischen Gerätes, hier des Zielgeräts 21 durch den Nutzer. Mittels des Feedbacks anhand der Feedbackeinrichtung 21b am Zielgerät 21 ermöglicht es also dem Nutzer zu erkennen, ob die Verbindung mit dem konkreten Gerät 21 aufgebaut wurde. Dies ist in Figur 2 dargestellt. Hierbei kann einem Nutzer beispielsweise optisch oder akustisch angezeigt werden, ob mit dem korrekten Gerät 21 eine Verbindung aufgebaut wurde. Falls es zu Fehlanwendungen kommt, so können diese durch den Feedback-Mechanismus 6, 20b, 21b, 22b signalisiert werden. Wenn der Nutzer die Nahfeld-Drahtlosschnittstellen 2a, 20a, 21a, 22a falsch zueinander ausrichtet und dadurch ein anderes Gerät 20 als das gewünschte Zielgerät 21 identifiziert wird, so kann der Nutzer dies durch ausbleibendes Feedback mittels der Feedbackeinrichtung 21b am Zielgerät 21 und Feedback mittels der Feedbackeinrichtung 20b am falsch identifizierten Gerät 20 erkennen, wie dies in Figur 3 dargestellt ist.

Weiterhin ermöglicht der Feedback-Mechanismus mittels der Feedbackeinrichtungen 6, 20b, 21b, 22b das Erkennen von Uneindeutigkeiten bei der Identifikation. Wenn zwei Geräte 20, 21 bei Tastendruck auf den Taster 5 in kurzer, insbesondere gleicher Entfernung zum Programmiergerät 2 angeordnet sind, so kann der Nutzer nach Messung der jeweiligen Signalstärken mittels der Feedbackeinrichtung 6 darauf aufmerksam gemacht werden, beispielsweise durch ein optisches Feedback, was in Figur 4 dargestellt ist. Das ausgelöste Feedback mittels der Feedbackeinrichtung 6 weicht vom Feedback bei eindeutiger Identifikation ab. Im Nachgang kann der Nutzer die relative Anordnung der Geräte 2, 20, 21, 22 zueinander entsprechend anpassen, um eine Eindeutigkeit der Identifizierung zu schaffen und eine erneute Fehlidentifikation zu verhindern.

Mit anderen Worten werden zur Identifikation das Identifiziergerät 2 und ein Zielgerät 21 nah zusammengeführt. Hierbei soll der Abstand zwischen der Nahfeld-Drahtlosschnittstelle 21a des Zielgerätes 21 und der des Identifiziergerätes 2 minimal gehalten werden. Durch kontinuierliche Messung der Signalstärke von Signalen der Nahfeld-Drahtlosschnittstellen 20a, 21a, 22a der einzelnen Geräte 20, 21, 22 kann das jeweils örtlich nächste Gerät durch das Identifiziergerät 2 eindeutig identifiziert werden. Da Signalstärkemessungen beispielsweise durch Signalreflektionen und Überlagerungseffekte gewissen Schwankungen unterliegen, wird insbesondere die Signalstärke über einen gewissen Zeitraum - Messzeitspanne - mit einer Abtastrate von mindestens 10 Hz bestimmt. Hierzu kann insbesondere mittels des Tasters 5 das Identifiziergerät 2 für eine gewisse Zeitspanne - Beobachtungszeitspanne - in einen Beobachtungsmodus versetzt werden. Hierbei misst beziehungsweise beobachtet das Identifiziergerät 2 über die Beobachtungszeitspanne die Signalstärken der Nahfeld-Drahtlosschnittstellen 20a, 21a, 22a. Erst wenn die Signale eines spezifischen Gerätes zumindest teilweise, insbesondere über die Messzeitspanne hinweg, einen vorgegebenen Signalstärkegrenzwert überschreiten, wird eine zuverlässige Identifikation angenommen. Die Zeitspannen und der Grenzwert sind insbesondere an das jeweilige Produktionsszenario anzupassen. Dabei ist die beobachtungszeitspanne mindestens fünfmal größer als die Messzeitspanne. Beispielsweise kann die Messzeitspanne 1 s betragen und die Beobachtungszeitspanne 10 s. Nach erfolgreicher Identifizierung kann dann eine Bedatung des Zielgeräts 21 durch das Identifikationsgerät 2 beziehungsweise das Programmiergerät erfolgen.

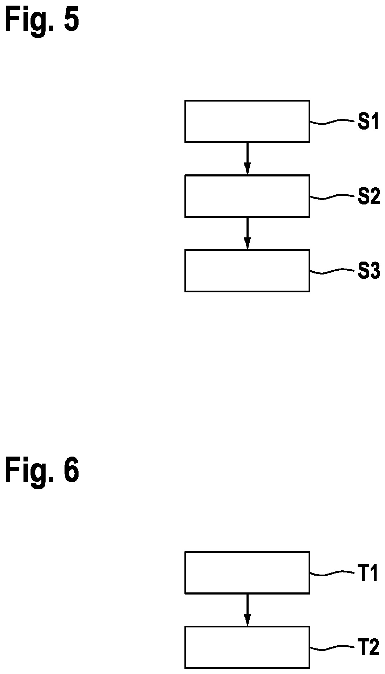

Figur 5 zeigt Schritte eines Verfahrens gemäß einer Ausführungsform der vorliegenden Erfindung.

In Figur 5 sind Schritte eines Verfahrens zum Identifizieren eines Geräts aus einer Vielzahl gleichartige Geräte durch ein Identifiziergerät mittels drahtloser Kommunikation gezeigt, wobei die Geräte und das Identifiziergerät jeweils eine Nahfeld-Drahtlosschnittstelle aufweisen.

Das Verfahren umfasst dabei die folgenden Schritte:
In einem ersten Schritt S1 erfolgt ein Heranführen des Identifiziergeräts an ein oder mehrere Geräte, derart, dass eine drahtlose Kommunikationsverbindung mittels der Nahfeld-Drahtlosschnittstellen zwischen dem Identifiziergerät und zumindest einem der Geräte herstellbar ist.

In einem weiteren Schritt S2 erfolgt ein Messen der jeweiligen von den Nahfeld-Drahtlosschnittstellen mehrerer Geräte bereitgestellten Signalstärken durch das Identifiziergerät.

In einem weiteren Schritt S3 erfolgt ein Identifizieren des örtlich nächsten Geräts anhand der gemessenen Signalstärken durch das Identifiziergerät.

Figur 6 zeigt Schritte eines Verfahrens gemäß einer Ausführungsform der vorliegenden Erfindung.

In Figur 6 sind Schritte eines Verfahrens zum Identifizieren eines Geräts aus einer Vielzahl gleichartiger Geräte ausgeführt durch ein Identifiziergerät gezeigt.

Das Verfahren umfasst dabei die folgenden Schritte:
In einem ersten Schritt T1 erfolgt ein Messen der jeweiligen von den Nahfeld-Drahtlosschnittstellen mehrerer Geräte bereitgestellten Signalstärken, wenn die Entfernung zu zumindest einem der Geräte dergestalt ist, dass eine drahtlose Kommunikationsverbindung mit zumindest einem der Geräte herstellbar ist.

In einem zweiten Schritt T2 erfolgt ein Identifizieren des örtlich nächsten Geräts anhand der gemessenen Signalstärken.

Zusammenfassend weist zumindest eine der Ausführungsform der Erfindung zumindest einen der folgenden Vorteile auf:
- Einfache Implementierung.
- Zuverlässige Identifizierung.
- Effiziente und schnelle Identifizierung.
- Geringer Aufwand.
- Nutzerführung zur Verhinderung von Fehlbedienungen

Obwohl die vorliegende Erfindung anhand bevorzugter Ausführungsbeispiele beschrieben wurde, ist sie nicht darauf beschränkt, sondern auf vielfältige Weise modifizierbar.

## Patentansprüche

1. Verfahren zum Identifizieren eines Geräts (20, 21, 22) aus einer Vielzahl gleichartiger Geräte (20, 21, 22) durch ein Identifiziergerät (2) mittels drahtloser Kommunikation (10), wobei die Geräte (20, 21, 22) und das Identifiziergerät (2) jeweils eine Nahfeld-Drahtlosschnittstelle (2a, 20a, 21a, 22a) aufweisen, umfassend die Schritte:
- Heranführen (S1) des Identifiziergeräts (2) an ein oder mehrere Geräte (20, 21, 22), derart, dass eine drahtlose Kommunikationsverbindung mittels der Nahfeld-Drahtlosschnittstellen (2a, 20a, 21a, 22a) zwischen dem Identifiziergerät (2) und zumindest einem der Geräte (20, 21, 22) herstellbar ist,
- Messen (S2) der jeweiligen von den Nahfeld-Drahtlosschnittstellen (2a, 20a, 21a, 22a) mehrerer Geräte (20, 21, 22) bereitgestellten Signalstärke durch das Identifiziergerät (2),
- Identifizieren (S3) des örtlich nächsten Geräts (21) anhand der gemessenen Signalstärken durch das Identifiziergerät (2).

2. Verfahren gemäß Anspruch 1, wobei die Signalstärken über eine vorgebbare erste Zeitspanne gemessen werden.

3. Verfahren gemäß Anspruch 2, wobei die Signalstärken über eine vorgebbare zweite Zeitspanne beobachtet, und innerhalb der zweiten Zeitspanne für die erste Zeitspanne gemessen werden.

4. Verfahren gemäß Anspruch 3, wobei wird die zweite Zeitspanne mindestens fünfmal so groß, insbesondere mindestens zehnmal so groß wie die erste Zeitspanne gewählt.

5. Verfahren gemäß einem der Ansprüche 1-4, wobei das Messen (S2) mit einer Abtastrate von mindestens 10 Hz, insbesondere mit mehr als 50 Hz, vorzugsweise mehr als 100 Hz, erfolgt.

6. Verfahren gemäß Anspruch 1-5, wobei ein Gerät (2) identifiziert wird, wenn ein vorgebbarer Schwellwert für die Signalstärke, insbesondere während der ersten Zeitspanne, vorzugsweise für mehr als die Hälfte der ersten Zeitspanne, überschritten wird.

7. Verfahren gemäß einem der Ansprüche 1-6, wobei die Lage der Nahfeld-Drahtlosschnittstellen (2a, 20a, 21a, 22a) an den Geräten (20, 21, 22) angezeigt wird und das Heranführen des Identifiziergeräts (2) an die jeweilige angezeigte Lage erfolgt.

8. Verfahren gemäß einem der Ansprüche 1-7, wobei das identifizierte Gerät (21) und/oder das Identifiziergerät (2) eine Rückmeldeinformation (6) über eine erfolgte Identifizierung bereitstellt.

9. Verfahren gemäß einem der Ansprüche 1-8, wobei bei einer unvollständigen oder uneindeutigen Identifizierung eines Geräts (20, 21, 22) eine Fehlerinformation bereitgestellt wird, insbesondere umfassend eine Ausrichtungsinformation für das Identifiziergerät (2).

10. Verfahren gemäß einem der Ansprüche 8-9, wobei die Rückmeldeinformation (6) und/oder die Fehlerinformation optisch, akustisch und/oder haptisch bereitgestellt wird, insbesondere wobei sich das Bereitstellen von Rückmeldeinformation (6) und Fehlerinformation zumindest teilweise unterscheidet.

11. Verfahren gemäß einem der Ansprüche 1-10, wobei das Messen (S2) und Identifizieren (S3) mittels einer Bestätigung initiiert wird.

12. Identifiziergerät (2) zum Identifizieren eines Geräts (20, 21, 22) aus einer Vielzahl gleichartiger Geräte (20, 21, 22) mittels drahtloser Kommunikation (10), wobei die Geräte (20, 21, 22) und das Identifiziergerät (2) jeweils eine Nahfeld-Drahtlosschnittstelle (2a, 20a, 21a, 22a) aufweisen, welches zur Durchführung der folgenden Schritte ausgebildet ist:
- Messen (T1) der jeweiligen von den Nahfeld-Drahtlosschnittstellen (2a, 20a, 21a, 22a) mehrerer Geräte (20, 21, 22) bereitgestellten Signalstärken, wenn die Entfernung zu zumindest einem der Geräte (20, 21, 22) dergestalt ist, dass eine drahtlose Kommunikationsverbindung (10) mit zumindest einem der Geräte (20, 21, 22) herstellbar ist, und
- Identifizieren (T2) des örtlich nächsten Geräts (21) anhand der gemessenen Signalstärken.

13. Identifiziergerät (2) nach Anspruch 12, wobei ein Taster (5) angeordnet ist, insbesondere ein mechanischer, induktiver oder kapazitiver Taster und/oder ein virtueller Taster auf einem Touchscreen, zum Auslösen der Schritte Messen (T1) und Identifizieren (T2).

14. Identifiziergerät nach einem der Ansprüche 12-13, wobei eine Rückmeldeeinrichtung (6) angeordnet ist, die ausgebildet ist, bei einer unvollständigen oder uneindeutigen Identifizierung eines Geräts (20, 21, 22) und/oder bei einer erfolgreichen Identifizierung eines Geräts (20, 21, 22) zumindest eine Rückmeldung (6), insbesondere optisch, akustisch, und/oder haptisch oder dergleichen, auszugeben.
